# EUROPEAN PATENT SPECIFICATION

(11) **EP 2 206 631 B1**
(45) Date of publication and mention of the grant of the patent: **02.01.2013**
(21) Application number: 08776957.6
(22) Date of filing: 28.05.2008
(51) Int. Cl.: B60R 21/16, B60R 21/20

(54) **SIDE AIRBAG**
SEITENAIRBAG
COUSSIN DE SÉCURITÉ GONFLABLE LATÉRAL

(30) Priority: 18.09.2007 JP 2007241507
(43) Date of publication of application: 14.07.2010
(73) Proprietor: Toyota Boshoku Kabushiki Kaisha, Kariya-city Aichi 448-8651 (JP)
(72) Inventor: SAKAI, Akihito, Kariya-shi Aichi 448-8651 (JP); KATO, Shuichi, Kariya-shi Aichi 448-8651 (JP); KOKUBUN, Daisuke, Kariya-shi Aichi 448-8651 (JP)
(74) Representative: TBK
(86) International application number: PCT/JP2008/059842
(87) International publication number: WO 2009/037900

(56) References cited:
- JP-A- 3 016 853
- JP-A- 6 344 843
- JP-A- 9 301 104
- JP-A- 11 278 195
- JP-A- 2004 268 880
- JP-A- 2004 268 880
- JP-A- 2004 299 483
- JP-A- 2004 299 483

## Description

The present invention relates to a side airbag according to the preamble of claim 1. More specifically, the present invention relates to a side airbag which can adjust an expansion rate or the like without changing a weaving density of the entire bag body when the bag body having a plurality of cells formed therein is expanded and inflated.

There has been conventionally known a side airbag to protect the waist, chest, and the like of a driver or a passenger in a collision of an automobile. This side airbag is generally mounted on a side window side of a seat. In a collision of a vehicle, a bag body of an airbag is expanded and inflated by an inflow of an inflation gas supplied from an inflator.

An airbag of this type has a configuration in which an interior of a bag body is partitioned into a plurality of cells to inflate the airbag with a time difference, for example, to inflate a portion corresponding to a waist first and then inflate a portion corresponding to a chest, furthermore, to inflate inflating portions with predetermined thicknesses. A partition portion, called a tedder, with air permeability is formed between the cells. In this manner, an inflation gas supplied from an inflator sequentially flows into the cells to prevent the bag body from being partially inflated to more than a predetermined thickness, so that the entire airbag is uniformly expanded.

Side airbags each having such partition portions are disclosed in Patent Documents 1 to 3 or the like. The side airbag in Patent Document 1 has a gas flow regulating member, i.e., a partition portion, arranged on a boundary part between a first inflation portion corresponding to a part or the whole of the chest of a driver or a passenger and a second inflation portion corresponding to the head, and can adjust time differences or the like of inflation between the respective portions by changing the number, sizes, or the like of communication holes formed in the gas flow regulating member. Furthermore, a tedder in the side airbag in Patent Document 2 maintains the shape of the airbag and has a variable structure which increases or reduces an opening area of a linear vent, i.e., an air vent while being pressed and bent by a driver or a passenger in collision, so that pressures in the partitioned chambers can be adjusted. In an airbag in Patent Document 3, an intermediate fabric portion is arranged which is formed by hollow weaving and can conduct an inflation gas between a front-surface-side fabric portion and a rear-surface-side fabric portion.

Patent Document 1: JP-A-H6-227348
Patent Document 2: JP-A-2001-213262
Patent Document 3: JP-A-2004-268880

However, the side airbag in Patent Document 1 is configured by two divided portions including a bag for chest and a bag for head formed by partitioning a bag body, and a communication hole is formed in a connection portion for connecting the two divided portions to each other. The side airbag in Patent Document 2 is similarly divided into a first panel and a second panel. These panels are integrated with each other by sewing, and a vent is formed in the first panel. Therefore, each of both the airbags is configured by a plurality of members, is manufactured by a large number of steps, and has a heavy load of manufacturing cost.

On the other hand, the airbag in Patent Document 3 is formed by hollow weaving and manufactured by steps the number of which is smaller than those of the airbags in Patent Documents 1 and 2. However, the airbag in Patent Document 3 can use a method of altering a weaving density of the intermediate fabric portion (second layer) or the like to adjust expansion states such as an expansion rate in expansion, a pressure distribution, and a thickness in expansion. However, when a weaving density of the intermediate fabric portion is changed, the weaving densities of the first layer and the third layers serving as external layers of the bag body need to be also changed accordingly. At this time, this change considerably influences an expansion capability of the airbag itself and a predetermined expansion capability might not have had been obtained.

JP-A-2004 299483 discloses a generic side airbag according to the preamble of claim 1.

A further side airbag is known from JP A-3 016853.

It is the object of the present invention to provide a side airbag which can adjust an inflation rate or the like without changing an entire weaving density when a bag body in which a plurality of cells is formed is expanded and inflated.

The object of the invention is solved with a side airbag having the features of claim 1.

Further advantageous developments are subject-matter of the dependent claims.

The present invention is as follows.
1. A side airbag comprising: a bag body which is formed into a bag-like shape with a topmost layer and a lowermost layer, with its interior partitioned into a plurality of cells; and a partition portion formed between the cells and configured by warp threads and weft threads, wherein
   the partition portion is configured by an intermediate layer having arranged therein an unwoven portion which can conduct a blowout gas from an inflator, and
   the topmost layer, the lowermost layer, and the intermediate layer are integrally formed by hollow weaving.
2. The side airbag according to 1 above, wherein the plurality of the unwoven portions is arranged in the intermediate layer.
3. The side airbag according to 1 or 2 above, wherein the interior of the bag body is partitioned into a plurality of cells in a direction orthogonal to a thickness direction of the airbag.
4. The side airbag according to 1 or 2 above, wherein the interior of the bag body is partitioned into a plurality of cells in a thickness direction of the airbag.

According to a side airbag of the present invention, an unwoven portion which can conduct an inflation gas without having a woven structure is arranged in an intermediate layer configuring a partition portion formed between cells in a bag body. With this configuration, an expansion rate in inflation of the bag portion, a pressure, a thickness in expansion, and the like can be adjusted by altering specifications such as the number of unwoven portions to be formed and forming positions, shapes, and sizes of the unwoven portions. When the specifications such as the areas of the unwoven portions are changed, weaving densities and the like in other layers such as a topmost layer and a lowermost layer need not be changed. For this reason, the change does not cause a danger of influencing an expansion capability of the airbag itself. Furthermore, in the side airbag according to the present invention, a plurality of layers such as a topmost layer, a lowermost layer, and an intermediate layer are integrally formed by multiple weaving (hollow weaving) which uses a predetermined number of threads and causes warp threads and weft threads to cross each other and to be multiple arrayed. For this reason, the side airbag can be manufactured with a simple configuration at a low cost.

### BRIEF DESCRIPTION OF THE DRAWINGS

FIG. 1 is an explanatory diagram schematically showing a portion where a side airbag is expanded.
FIG. 2 is an explanatory diagram schematically showing a vertical section (a) of the side airbag and an X - X section in (a).
FIG. 3 is an explanatory diagram schematically showing a weave texture of an intermediate layer configuring a partition portion in the side airbag.
FIG. 4 is an explanatory diagram schematically showing sections of layers configuring the side airbag.
FIG. 5 is an explanatory diagram schematically showing weave textures of the layers configuring the side airbag.
FIG. 6 is an explanatory diagram schematically showing a vertical section (a) of the side airbag and a Y-Y section in (a).
FIG. 7 is an explanatory diagram schematically showing a configuration of another side airbag according to the present invention.

### [Description of the Reference Numerals]

1, 10: side airbag; 11: bag body; 11A, 11B, 11C: cell; 2, 21, 22: topmost layer; 3, 31, 32; lowermost layer; 4: intermediate layer; 41: woven portion; 42: unwoven portion; 5, 51, 52: partition portion; 61, 62, 63, 64, 65, 66: warp thread and 71, 72, 73: weft thread.

### BEST MODE FOR CARRYING OUT THE INVENTION

An embodiment of the present invention will be described below in detail.
A side airbag according to the present invention is formed by hollow weaving and includes a bag body which is formed into a bag-like shape with a topmost layer and a lowermost layer, with its interior partitioned into a plurality of cells; and a partition portion formed between the cells.
The "side airbag" is mainly stored on a side window side or the like of a seat of a vehicle. In collision of the vehicle, a bag body is expanded and inflated to bury a gap between a driver or a passenger and a side door side or a side window side by a blowout gas (inflation gas) supplied from an inflator so as to protect the waist, the abdomen, the chest, and the like of the driver or the passenger.

The "bag body" is formed to have a bag-like shape with a topmost layer and a lowermost layer and has an interior partitioned into a plurality of cells with a partition portion (will be described later).
The shape of the bag body is not limited to a specific shape. The shape is arbitrarily selected depending on a vehicle type or the like on which the side airbag is mounted. In particular, since the side airbag according to the present invention has a bag body which is expanded and inflated to bury a gap between a driver or a passenger and a side door side or a side window side, the side airbag can have an almost flat shape with respect to a section of the vehicle.

The "topmost layer" and the "lowermost layer" are integrally formed by hollow weaving together with an intermediate layer configuring a partition portion (will be described later). More specifically, the side airbag according to the present invention is formed by a multiple weaving (hollow weaving) which uses a predetermined number of threads and causes warp threads arrayed in a vertical direction and weft threads arrayed in a horizontal direction to cross each other and to select a single woven texture or a multiple woven texture for each predetermined region. In inflation of the airbag, a layer on the nearest side window side may be the topmost layer or the lowermost layer.

Chloroprene-based coating, silicone-based coating, urethane-based coating, polyamide-based coating, polyester-based coating, polyacryl-based coating, polyolefin-based coating, fluorine-based coating, chlorosulfonated-polyethylene-based coating, or the like may be applied to the surface of the bag body. This coating can cause heat resistance of the bag body to be improved or cause air permeability of the bag body to be adjustable.

The shape of the "cell" is not limited to a specific shape, and is arbitrarily selected depending on a type of a vehicle on which the side airbag is mounted, a part of a human body to be protected, and the like. A thickness of each cell in inflation is not limited to a specific thickness, and can be arbitrarily adjusted for each cell as needed.
Although the number of cells to be formed is limited to two or more, the number of cells is normally 2 to 5, more preferably 2 to 3.

Although the plurality of cells may be partitioned and formed by any method, for example, the cells can be continuously formed in a thickness direction of an airbag when the airbag is expanded and inflated (i.e., a width direction of the vehicle) or a direction orthogonal to the width direction [i.e., a sectional direction of the vehicle (in particular, an almost vertical direction of the vehicle)].

The "partition portion" is configured by an intermediate layer having arranged therein an unwoven portion in which an inflation gas (blowout gas) supplied from an inflator can be conducted, and partitions the interior of the bag body to form a plurality of cells. In the side airbag according to the present invention, the partition portion regulates a flow of the blowout gas between the cells and also functions as a tedder which regulates the thickness of the side airbag.
The intermediate layer is constituted by an unwoven portion and a single or multiple woven texture portion formed by the hollow weaving. Specifications such as the number of unwoven portions to be formed and the forming positions, shapes, sizes, and the like of the unwoven portions are not limited to specific specifications as long as the blowout gas can be conducted and can be arbitrarily selected as needed.

In the airbag according to the present invention, much of the inflation gas blown out from the inflator into the cells and supplied to the partition portion is conducted in the unwoven portions to be flowed out into the other cells. More specifically, in comparison with the woven texture portion which is densely woven, warp threads and weft threads are not woven to each other in the unwoven portion. For this reason, as the cells are inflated by gas pressure, gaps between the threads are enlarged to make it possible to conduct the gas. Accordingly, in the present invention, a flow speed and a flow rate of the inflation gas passing through the partition portion can be altered on the basis of the configuration of the intermediate layer, especially, the specifications of the unwoven portions, i.e., the number of unwoven portions and the forming positions, shapes, sizes, and the like of the unwoven portions. As a result, changing the specifications of the unwoven portions enables to adjust the expansion state of the bag body, i.e., an expansion rate and a pressure when the bag body is inflated, a thickness in expansion, and the like.

### [Embodiments]

The present invention will be further described in more detail by embodiments with reference to the drawings.

### Embodiment 1

### (1) Configuration of Airbag 1

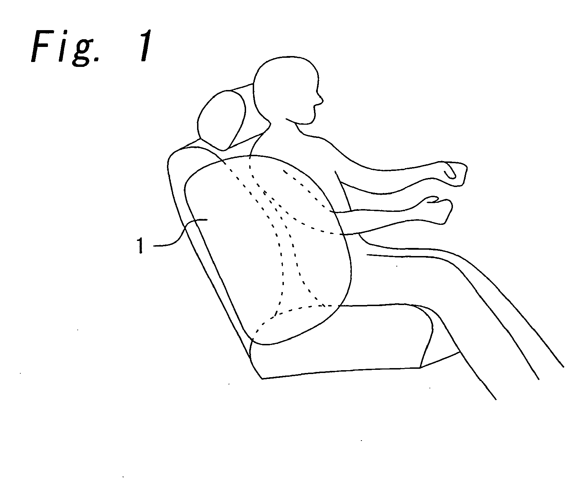

[1] A side airbag according to Embodiment 1 will be described below with reference to FIGS. 1 to 5.
In FIG. 1, an inflation gas is supplied from an inflator (not shown) arranged on a side window side of a seat in a vehicle into a side airbag 1. The side airbag 1 is expanded and inflated upwardly from the waist of a passenger seated on a driver seat to the chest of the passenger to protect the passenger against impact occurring in collision of the vehicle.

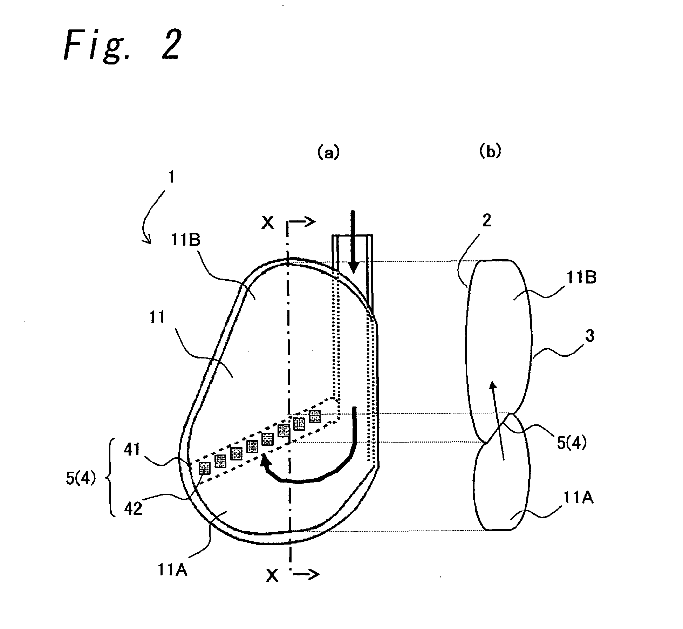

The side airbag 1, as shown in FIG. 2, includes a bago body 11 which is formed to have a bag-like shape with a topmost layer 2 and a lowermost layer 3, with its interior partitioned and formed into two cells 11A and 11B in a vertical direction of the vehicle, and a partition portion 5 arranged between the cells and configured by an intermediate layer 4 through which a blowout gas (see an arrow in FIG. 2) supplied from an inflator (not shown) can be conducted. The surfaces of the topmost layer 2 and the lowermost layer 3 are coated with silicone rubber (coating quantity: 30 g/m²). A position where the inflator is arranged is not limited to a specific position as long as the inflation gas can be supplied into the bag body 11 and arbitrarily adjusted depending on the shape of the side airbag 1.

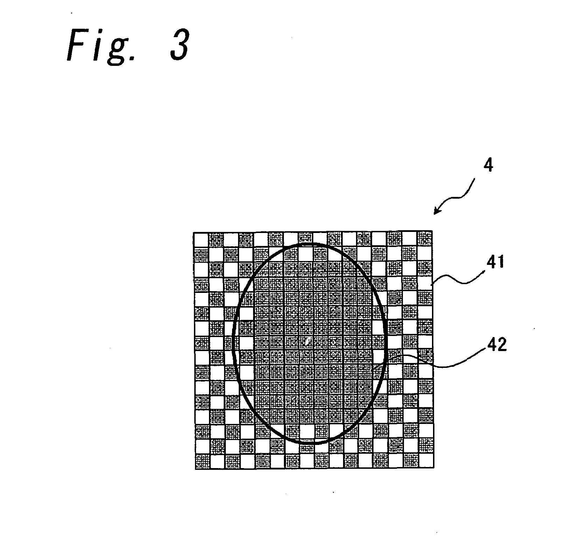

The partition portion 5 is configured by the intermediate layer 4 including a woven portion 41 and unwoven portions 42 which are formed at a plurality positions to be dotted in line in the woven portion 41.
In this case, textures of the woven portion 41 and the unwoven portion 42 will be specifically described. As shown in FIG. 3, the woven portion 41 is a texture (see an outside of an elliptic shape) woven by causing warp threads and weft threads to cross each other, and the unwoven portion 42 is a texture (see an inside of the elliptic shape) in which warp threads and weft threads do not cross each other, i.e., the warp threads and the weft threads are not woven to each other.

The side airbag 1 is formed by hollow weaving which uses a predetermined number of threads and causes warp threads arrayed in a vertical direction and weft threads arrayed in a horizontal direction to cross each other and to select a single woven texture or a multiple woven texture for each predetermined region (use threads; available from Toyobo Co., Ltd., 470 dtex 72f HS, thread density; warp threads: 30 threads/inch, weft thread: 48 threads/inch).

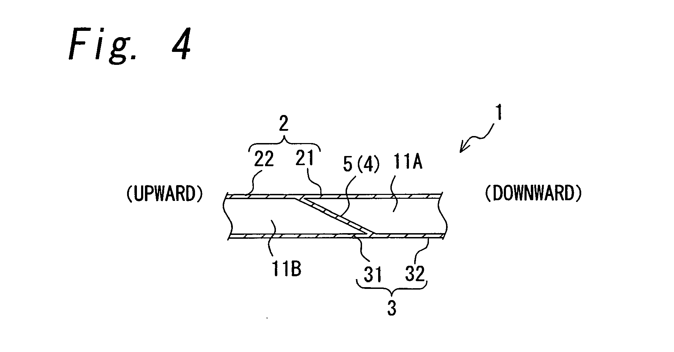

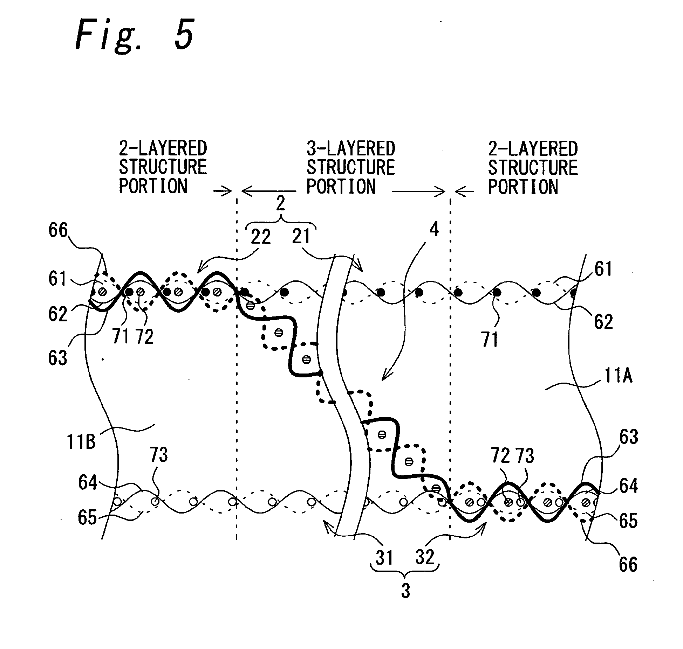

More specifically, as shown in FIG. 4 (schematic diagram in FIG. 2(b)) and FIG. 5 (schematic explanatory diagram of a detailed woven structure in the layers in FIG. 4), the side airbag 1 according to Embodiment 1 is configured by (i) a two-layered structure portion including the topmost layer 2 (22) and the lowermost layer 3 (31), (ii) a three-layered structure portion including the topmost layer 2 (21), the intermediate layer 4, and the lowermost layer 3 (31), (iii) a two-layered structure portion including the topmost layer 2 (21) and the lowermost layer 3 (32), and (iv) an outer edge portion (not shown) of the bag body 11 configured a one-layered structure. At this time, the topmost layer 2, as shown in FIG. 5, is configured by a single woven texture portion 21 textured by warp threads 61 and 62 and a weft thread 71, and a double woven texture portion 22 textured by the warp threads 61, 62, 63 and 66, and the weft thread 71 and 72. The lowermost layer 3 is configured by a single woven texture portion 31 textured by warp threads 64 and 65 and the weft thread 73 and a double woven texture portion 32 textured by the warp threads 63, 64, 65 and 66 and the weft threads 72 and 73. Furthermore, the intermediate layer 4 is configured by a woven portion 41 (single woven texture portion) textured by the warp threads 63 and 66 and the weft thread 72 and the unwoven portion 42. An outer edge portion of the bag body 11 in the side airbag 1 is edged with a triple woven texture portion (not shown) textured by the warp threads 61 to 66 and the weft threads 71 to 73.

### (2) Operational Advantage of Embodiment 1

In the side airbag 1 according to Embodiment 1, an inflation gas is blown out of the inflator by accidental collision, the blowout gas flows into the lower cell 11A to inflate the lower cell 11A. At the moment the lower cell 11A is inflated, the intermediate layer 4 configuring the partition portion 5 is pressured by the blowout gas. In this case, since the woven portion 41 in the intermediate layer 4 is in a state in which each warp thread and each weft thread cross each other, quantity of the blowout gas conducted in the portion is very small. On the other hand, since the warp threads and the weft threads are not woven in the unwoven portion 42 in the intermediate layer 4, the unwoven portion 42 is inflated in an almost circular-arc shape to enlarge gaps between the warp threads and the weft threads, and the blowout gas can be conducted through the gaps and flows into the cell 11B. Thereafter, when the blowout gas flows into the lower cell 11B, the cell 11B is inflated to inflate the airbag as a whole.

As described above, in the side airbag 1, the partition portion 5 configured by the intermediate layer 4 which can conduct the blowout gas supplied form the inflator is arranged between the cell 11A and the cell 11B. Thus, the two cells are expanded and inflated with a slight time difference. In accidental collision, fixation of the waist is important. For this reason, the lower cell 11A is preferentially inflated toward the waist of a driver or a passenger, and the human body is held at a predetermined position. Thereafter, the cell 11B is inflated toward the chest of the driver or the passenger to moderate an impact of collision to make it possible to protect the human body of the driver or the passenger.

In the side airbag 1, as in a conventional art, unlike in a side airbag which is formed in many steps by weaving independent layers, the layers can be integrally formed by hollow weaving. The side airbag 1 can be inexpensively and easily manufactured.
Furthermore, in the side airbag 1, since the air permeability of the entire intermediate layer 4 is varied by specifications such as the number, positions, shapes and sizes of the unwoven portions 42 formed, it is possible to adjust expansion states such as expansion rates and pressures of the cells in inflation, and thicknesses of the cells in expansion, depending on the specifications. Therefore, when the side airbag 1 is to be designed, an expansion/inflation test can be performed while changing the specifications of the unwoven portions 42 in the intermediate layer 4, and optimum expansion conditions can be set. For example, inflation pressures of the cells are differentiated to make it possible to strongly inflate a portion corresponding to the waist and to weakly inflate a portion corresponding to the chest. Furthermore, an inflation thickness in expansion can also be easily adjusted.

### [2] Embodiment 2

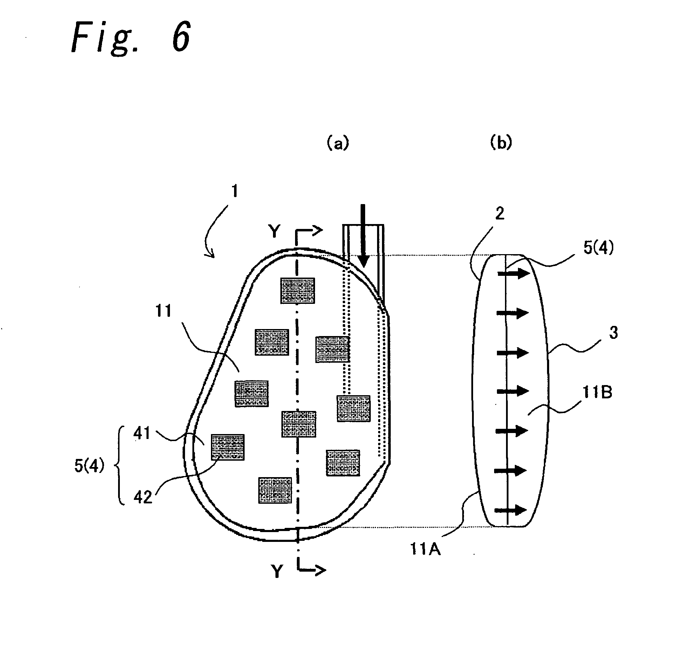

A side airbag 10 according to Embodiment 2 will be described below with reference to FIG. 6. The same reference numerals as in Embodiment 2 denote the same constituent parts in Embodiment 1, and a detail of the configuration will not be described.
In the side airbag 10 according to Embodiment 2, the bag body 11 is partitioned and formed into the two cells 11A and 11B in a thickness direction (width direction of a vehicle) through the partition portion 5 configured by the intermediate layer 4 arranged at the center of the side airbag 10. In the side airbag 10, an inflation gas supplied from an inflator (not shown) flows into the cell 11A, and the cell 11A is inflated to have a predetermined thickness. Thereafter, the gas flows into the cell 11B through the partition portion 5 configured by the intermediate layer 4 to inflate the entire bag body 11 including the cell 11B until the bag body 11 has a predetermined thickness. The intermediate layer 4 is configured by the woven portion 41 and the unwoven portion 42 as in Embodiment 1, and the unwoven portions 42 are arranged to be dotted at a plurality of positions.

The side airbag 10 according to Embodiment 2, as in the side airbag 1 according to Embodiment 1, is woven using a predetermined number of threads and causes warp threads arrayed in a vertical direction and weft threads arrayed in a horizontal direction to cross each other and to select a single woven texture or a multiple woven texture for each predetermined region. A circumference of the bag body 11 in the side airbag 10 is edged by a three-layered woven texture, and the topmost layer 2 and the lowermost layer 3 are configured by a single woven texture, and the intermediate layer 4 configuring the partition portion 5 is configured by a single woven texture (woven portion 41) and the uneven portions 42.

As described above, the side airbag 10 according to Embodiment 2 can be inexpensively and easily manufactured by hollow weaving. The partition portion 5 in the side airbag 10 according to Embodiment 2 described above, as in Embodiment 1, is configured by the intermediate layer 4 configured of the woven portion 41 and the unwoven portions 42. With this configuration, an expansion state of the bag body 11 in the airbag 10 can be adjusted by a simple means which only changes the specifications of the partition portion 5. In particular, in the side airbag according to Embodiment 2, expansion and inflation (inflation of the cell 11 A) in a plane direction can be preferred to expansion and inflation (inflation of the cell 11B) in a thickness direction. Accordingly, in collision, a necessary area is first inflated, and thereafter, a necessary thickness can be inflated with a time difference.

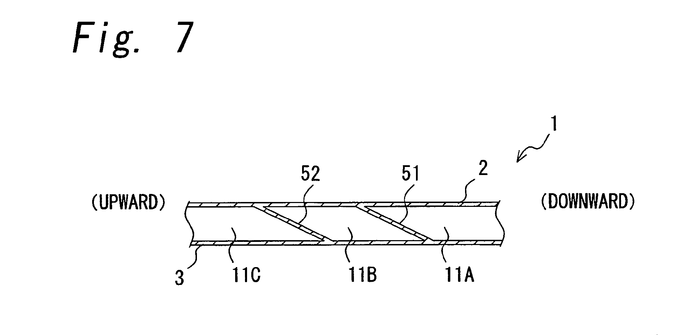

In the present invention, embodiments are not limited to the above concrete embodiments, and various change can be made as embodiments depending on purposes and applications within the spirit and scope of the invention can be used. For example, in Embodiment 1 described above, the bag body 11 is partitioned and formed into the two cells 11A and 11 B in the vertical direction of the vehicle. However, the bag body 11 can be partitioned and formed into three or more cells. More specifically, as shown in FIG. 7, two partition portions 51 and 52 are arranged to make it possible to partition and form the three cells 11A,11B, and 11C. In this case, the lower cell 11A is inflated against a waist, the intermediate cell 11 B is inflated against an abdomen, and the upper cell 11C is inflated against a chest. In this manner, the cells of the airbag can be sequentially expanded and inflated against the waist, the abdomen, and the chest. Furthermore, specifications such as the number of arranged unwoven portions on the partition portions 51 and 52 are arbitrarily adjusted, thereby enabling to reduce inflation pressures of the cells corresponding to the waist, the abdomen, and the chest sequentially.
In Embodiment 2, the bag body 11 is partitioned and formed into the two cells 11A and 11B in a thickness direction (width direction of a vehicle). However, as described above, the number of partition portions configured by intermediate layers is also increased to make it possible to partition and form the bag body 11 into three or more cells in the thickness direction.

## Claims

1. A side airbag (1) comprising: a bag body (11) which is formed into a bag-like shape with a topmost layer (2) and a lowermost layer (3), with its interior partitioned into a plurality of cells (11A, 11B); and a partition portion (5) formed between the cells (11A, 11B) and configured by warp threads and weft threads, wherein
the partition portion (5) is configured by an intermediate layer (4), and
the topmost layer (2), the lowermost layer (3), and the intermediate layer (4) are integrally formed by hollow weaving,
**characterized in that**
the intermediate layer (4) has arranged therein an unwoven portion (42) which can conduct a blowout gas from an inflator and in which warp threads and weft threads are not woven to each other.

2. The side airbag (1) according to claim 1, wherein the plurality of the unwoven portions (42) are arranged in the intermediate layer.

3. The side airbag (1) according to claim 1 or 2, wherein in the interior of the bag body (11), a plurality of cells (11A, 11B) are partitioned and formed in a direction orthogonal to a thickness direction of the airbag (1).

4. The side airbag (1) according to claim 1 or 2, wherein the interior of the bag body (11) is partitioned into a plurality of cells (11A, 11B) in a thickness direction of the airbag (1).

## Patentansprüche

1. Seitenairbag (1) mit: einem Sackkörper (11), der in einer sackartige Form mit einer obersten Lage (2) und einer untersten Lage (3) ausgebildet ist, wobei sein Inneres in eine Vielzahl von Zellen (11A, 11B) aufgeteilt ist; und einem Aufteilungsabschnitt (5), der zwischen den Zellen (11A, 11B) ausgebildet ist und durch Kettfäden und Schussfäden gebildet ist, wobei
der Aufteilungsabschnitt (5) durch eine Zwischenlage (4) gebildet ist, und
die oberste Lage (2), die unterste Lage (3) und die Zwischenlage (4) durch Hohlweben einstückig ausgebildet sind,
**dadurch gekennzeichnet, dass**
die Zwischenlage (4) in sich einen nicht gewebten Abschnitt (42) angeordnet hat, der ein Ausblasgas von einem Befüller führen kann und in dem Kettfäden und Schussfäden nicht miteinander verwebt sind.

2. Seitenairbag (1) nach Anspruch 1, wobei die Vielzahl der nicht gewebten Abschnitte (42) in der Zwischenlage angeordnet ist.

3. Seitenairbag (1) nach Anspruch 1 oder 2, wobei in dem Inneren des Sackkörpers (11) eine Vielzahl von Zellen (11A, 11B) aufgeteilt ist und in einer Richtung senkrecht zu einer Dickenrichtung des Airbags (1) ausgebildet ist.

4. Seitenairbag (1) nach Anspruch 1 oder 2, wobei das Innere des Sackkörpers (11) in eine Vielzahl von Zellen (11A, 11B) in einer Dickenrichtung des Airbags (1) aufgeteilt ist.

## Revendications

1. Coussin de sécurité gonflable latéral (1) comprenant : un corps de coussin (11) qui est formé selon une forme similaire à un coussin avec une couche qui est la plus supérieure (2) et une couche qui est la plus inférieure (3), avec son intérieur divisé en une pluralité de cellules (11A, 11B) ; et une partie de séparation (5) formée entre les cellules (11A, 11B) et configurée par des fils de chaînes et des fils de trame, où
la partie de séparation (5) est configurée par une couche intermédiaire (4), et
la couche la plus supérieure (2), la couche la plus inférieure (3), et la couche intermédiaire (4) sont intégralement formées par un tissage creux,
**caractérisé en ce que**
une partie non tissée (42) est agencée à l'intérieur de la couche intermédiaire (4) qui peut conduire un gaz de soufflage à partir d'un gonfleur et où les fils de chaînes et les fils de trame ne sont pas tissés entre eux.

2. Coussin de sécurité gonflable latéral (1) selon la revendication 1, dans lequel la pluralité de parties non tissées (42) sont agencées dans la couche intermédiaire.

3. Coussin de sécurité gonflable latéral (1) selon la revendication 1 ou 2, dans lequel à l'intérieur du corps de coussin (11), une pluralité de cellules (11A, 11B) sont séparées et formées dans une direction orthogonale à une direction d'épaisseur du coussin de sécurité gonflable (1).

4. Coussin de sécurité gonflable latéral (1) selon la revendication 1 ou 2, dans lequel l'intérieur du corps de coussin (11) est divisé en une pluralité de cellules (11A, 11B) dans une direction d'épaisseur du coussin de sécurité gonflable (1).
